# EUROPÄISCHE PATENTSCHRIFT

(11) **EP 2 983 009 B1**
(45) Veröffentlichungstag und Bekanntmachung des Hinweises auf die Patenterteilung: **09.12.2020**
(21) Anmeldenummer: 14180433.6
(22) Anmeldetag: 08.08.2014
(51) Int. Cl.: G01S 17/04, G01S 7/484, G01S 7/487

(54) **BETREIBEN EINES OPTOELEKTRONISCHEN SENSORS MITTELS EINES VERFAHRENS ZUM AUSSENDEN VON LICHTIMPULSEN**
Operation of an optoelectronic sensor using a method for emitting light pulses
Fonctionnement d'un capteur optoélectronique selon un procédé d'émission d'impulsions lumineuses

(43) Veröffentlichungstag der Anmeldung: 10.02.2016
(73) Patentinhaber: Balluff GmbH, 73765 Neuhausen a.d.F. (DE)
(72) Erfinder: Grabe, Eckart, 70794 Filderstadt (DE); Fingerle, Bernd, 72667 Schlaitdorf (DE)
(74) Vertreter: Jakelski & Althoff Patentanwälte PartG mbB

(56) Entgegenhaltungen:
- WO-A1-2013/094062
- DE-A1- 19 833 353
- US-A- 5 026 156
- US-A1- 2010 194 583

## Beschreibung

Die vorliegende Erfindung betrifft ein Verfahren zum Aussenden von Lichtimpulsen, das zum Betreiben eines optoelektronischen Sensors verwendet wird, dessen Sender in einem Betriebszustand mittels des erfindungsgemäßen Verfahrens Lichtimpulse aussendet. Außerdem betrifft die vorliegende Erfindung ein Computerprogramm, welches eingerichtet ist, jeden Schritt des erfindungsgemäßen Verfahrens durchzuführen, sowie ein maschinenlesbares Speichermedium, auf welchem das erfindungsgemäße Computerprogramm gespeichert ist. Schließlich betrifft die Erfindung einen optoelektronischen Sensor, welcher eingerichtet ist, um mittels eines erfindungsgemäßen Verfahrens betrieben zu werden.

### Stand der Technik

Optoelektronische Sensoren, beispielsweise Lichttaster, senden Lichtimpulse mit einer vorgegebenen Frequenz aus. Werden diese Lichtimpulse von einem zu untersuchenden Objekt reflektiert, können hieraus Rückschlüsse auf Vorhandensein und Abstand des Objektes gezogen werden.

Um die Überlagerung von zwei Echos desselben optoelektronischen Sensors zu vermeiden, ist es aus der WO 2013/094062 A1 bekannt, dass ein Sender des optoelektronischen Sensors Lichtimpulspaare aussendet.

Indem nicht nur das Vorliegen eines Empfangssignals, sondern auch das Frequenzmuster des Empfangssignals erkannt werden, können die vom Sensor selbst ausgesandten Lichtimpulse von aus der Umgebung einfallenden optischen Störsignalen unterschieden werden. Hierzu sind der Sender und der Empfänger des optoelektronischen Sensors synchronisiert. Allerdings können Störsignale dennoch fehlerhaft als Lichtimpulse des Sensors interpretiert werden, wenn sie von den vom Sensor ausgesandten Lichtsignalen nicht ausreichend unterscheidbar sind. Dies kann etwa dann der Fall sein, wenn in der Umgebung des Sensors ein weiterer Sensor desselben Herstellers verwendet wird, welcher Lichtimpulse mit demselben Frequenzmuster aussendet. Auch stroboskopisch flackernde Lichtquellen in der Umgebung können zufälligerweise ein Frequenzmuster aufweisen, welches sich mit dem am Empfänger des optoelektronischen Sensors erwarteten Frequenzmuster deckt. Dies führt bei einem Lichttaster zu einem fehlerhaften Schalten.

Um eine gegenseitige Beeinflussung gleichartiger optoelektronischer Sensoren zu verringern, ist es bekannt eine statistische Streuung der Taktzeiten bzw. Periodendauer der Sensoren vorzusehen. Dies ist oftmals durch Bauteiltoleranzen unvermeidlich gegeben.

Aus der US 5,026,156 ist es bekannt, Lichtimpulsmuster mit eindeutigen Pausenpaaren auszusenden, so dass durch Erkennung der Pausenlänge ein Rückschluss auf den Sender des Lichtimpulsmusters möglich ist.

Außerdem ist die Verwendung frequenzabhängiger Filter bekannt, die als Hochpass-, Tiefpass- oder Bandpassfilter ausgeführt sein können.

Weiterhin ist es aus der DE 198 33 353 C2 bekannt, vor dem Erzeugen eines jeden Sendepulses auf das Vorhandensein von Störsignalen zu testen. Hierzu ist allerdings eine zusätzliche Messung des Empfangssignals notwendig, um danach den Sendepuls zu verzögern, wenn bereits ein Störsignal gemessen wurde.

Die US 2010/0194583 A1 schlägt vor, in einem störungsfreien Betriebszustand Lichtimpulse mit konstanter Pausenlänge auszusenden. Wenn eine Interferenz erkannt wird, dann wird die Pausenlänge variiert.

Es ist Aufgabe der vorliegenden Erfindung, ein Verfahren zum Betreiben eines optoelektronischen Sensors sowie einen mit diesem Verfahren betreibbaren optoelektronischen Sensor bereitzustellen, um die Überlagerung von Nutzsignalen des optoelektronischen Sensors mit Störungen, die sporadisch oder in festen Zeitintervallen auftreten, zu reduzieren.

### Offenbarung der Erfindung

Diese Aufgabe wird in einem durch das erfindungsgemäße Verfahren zum Betreiben eines optoelektronischen Sensors gemäß Anspruch 1 gelöst. In diesem Verfahren werden Lichtimpulse in sich wiederholenden Mustern von mindestens drei Lichtimpulsen ausgesandt. Alle Pausenlängen zwischen den Lichtimpulsen eines Musters sind unterschiedlich. Jede Pausenlänge oder Zykluslänge liegt im Bereich von 60 % bis 150 % des arithmetischen Mittelwerts aller Pausenlängen oder Zykluslängen eines Musters. Unter einer Zykluslänge wird dabei erfindungsgemäß die Summe der Längen eines Lichtimpulses und der unmittelbar darauf folgenden Pause verstanden. Der arithmetische Mittelwert der Länge zweier unmittelbar aufeinander folgender Pausen oder Zyklen liegt bevorzugt im Bereich von 80 % bis 112 % des arithmetischen Mittelwerts der Länge aller Pausen oder Zyklen eines Musters. Der arithmetische Mittelwert der Länge von vier unmittelbar aufeinander folgenden Pausen oder Zyklen liegt vorzugsweise im Bereich von 90 % bis 108 % des arithmetischen Mittelwerts der Längen aller Pausen oder Zyklen eines Musters. Der arithmetische Mittelwert der Länge von acht unmittelbar aufeinander folgenden Pausen oder Zyklen liegt bevorzugt im Bereich von 95 % bis 106 % des arithmetischen Mittelwerts der Länge aller Pausen oder Zyklen eines Musters. Die Länge aller Lichtimpulse innerhalb eines Musters ist vorzugsweise identisch. Bei Verwendung des erfindungsgemäßen Verfahrens zum Aussenden von Lichtimpulsen kann ein Variationsmuster der Lichtimpulse vorgegeben werden, bei dem über eine Anzahl aufeinander folgender Lichtimpulse, die der Hälfte der Anzahl der Lichtimpulse eines Musters entspricht, sich maximal zwei Lichtimpulse überlagern, wenn Störimpulse mit festen Zeitintervallen auftreten oder eine andere Lichtquelle Lichtimpulse nach demselben Schema aussendet. Dies ermöglicht es, mittels einer Mehrfachauswertung, d. h. einer Auswertung mehrerer aufeinanderfolgender Lichtimpulse, Störimpulse zu erkennen.

Innerhalb eines Musters wird die Länge einer Pause gegenüber der Länge der unmittelbar vorhergehenden Pause vorzugsweise abwechselnd größer und geringer. In Kombination mit der erfindungsgemäßen Bereichsvorgabe für alle Pausenlängen ist die Abweichung des so erzeugten Sendemusters von einem Sendemuster mit konstanter Frequenz so gering, dass das erfindungsgemäße Verfahren zum Aussenden von Lichtimpulsen aus dem Sender eines optoelektronischen Sensors verwendet werden kann, ohne dass sich die notwendige Energie oder der mittlere elektrische Strom eines Sendeelements, welches die Lichtimpulse aussendet, gegenüber dem Betrieb mit einem herkömmlichen Sendemuster konstanter Frequenz nennenswert ändert.

Es ist weiterhin bevorzugt, dass alle Puls-/Pausenverhältnisse desselben Musters Primzahlen sind, oder dass alle Zykluslängen desselben Musters in Mikrosekunden Primzahlen sind, oder dass die Verhältnisse der Zykluslängen Primzahlverhältnisse sind. Alternativ ist es bevorzugt, dass ein Puls/Pausen-Verhältnis eines Musters 95 % bis 105 % des arithmetischen Mittelwerts aller Puls/Pausen-Verhältnisse des Musters entspricht und alle weiteren Puls-/Pausenverhältnisse desselben Musters Primzahlen sind. Alternativ ist es bevorzugt, dass eine Zykluslänge eines Musters 95 % bis 105 % des arithmetischen Mittelwerts aller Zykluslängen des Musters entspricht und alle weiteren Zykluslängen desselben Musters in Mikrosekunden Primzahlen sind oder die Verhältnisse der Zykluslängen Primzahlverhältnisse sind. Indem dem Sendemuster der Lichtimpulse Primzahlen zugrunde gelegt werden, wird die Wahrscheinlichkeit einer Interferenz mit gleichartigen Sendemustern noch weiter gesenkt, solange die Sendemuster nicht synchron laufen.

Die Division der Länge jedes Zyklus in Mikrosekunden durch drei ergibt vorzugsweise eine ganze Zahl. Dies ermöglicht eine Durchführung des erfindungsgemäßen Verfahrens mit besonderen kurzen Pausenzeiten.

Der optoelektronische Sensor, weist mindestens einen Sender und mindestens einen Empfänger auf. Der Sender sendet in einem ersten Betriebszustand des optoelektronischen Sensors Lichtimpulse in der oben beschriebenen Weise aus.

Dieses Verfahren umfasst vorzugsweise eine Mehrfachabtastung von mittels des Empfängers empfangenen Lichtimpulsen, um neben der Intensität von Lichtimpulsen auch deren Länge erkennen zu können.

Der Sender sendet in einem ersten Betriebszustand des optoelektronischen Sensors Lichtimpulse mit konstanter Pausenlänge aussendet und in einem zweiten Betriebszustand des optoelektronischen Sensors Lichtimpulse in der oben beschriebenen Weise. Dabei entsprechen die Pausenlängen in dem ersten Betriebszustand 95 % bis 105 % des arithmetischen Mittelwerts aller Pausenlängen eines Musters in dem zweiten Betriebszustand. Mittels dieses Verfahrens kann ein optoelektronischer Sensor in seinem ersten Betriebszustand wie ein herkömmlicher optoelektronischer Sensor mit konstanter Frequenz betrieben werden. In seinem zweiten Betriebszustand werden die Pausenlängen gegenüber dem ersten Betriebszustand variiert, um eine Interferenz mit Störsignalen zu verringern. Gleichzeitig bleibt der Mittelwert aller Pausenlängen im ersten und im zweiten Betriebszustand gleich, so dass die Auswertestrategie des optoelektronischen Sensors beim Wechsel der Betriebszustände nur unwesentlich angepasst werden muss.

Ein Wechsel von dem ersten Betriebszustand in den zweiten Betriebszustand erfolgt dann, wenn der Empfänger ein Lichtsignal empfängt, dessen Intensität einen vorgegebenen Schwellenwert überschreitet. Vorzugsweise erfolgt der Wechsel dann, wenn die Intensität des empfangenen Lichtsignals nicht nur einen ersten Schwellenwert überschreitet, sondern gleichzeitig unter einem zweiten Schwellenwert liegt. Dies ermöglicht es, den optoelektronischen Sensor zunächst in herkömmlicher Weise zu betreiben und erst bei Empfang eines Lichtsignals, welches auf die Anwesenheit einer Störquelle schließen lässt, in den zweiten Betriebszustand umzuschalten. Der Einsprung in das Muster von Lichtimpulsen eines Musters des ersten Aspekts des erfindungsgemäßen Verfahrens kann dabei an beliebiger Stelle erfolgen.

Weiterhin ist es bevorzugt, dass ein Wechsel von dem zweiten Betriebszustand in den ersten Betriebszustand nur am Ende eines Musters erfolgt, und dass die letzte Pausenlänge jedes Musters im Bereich von 90 % bis 110 % der konstanten Pausenlängen des ersten Betriebszustandes liegt. Dies stellt sicher, dass bei Wechsel vom zweiten Betriebszustand in den ersten Betriebszustand nur eine geringe Änderung der ersten Pausenlänge des ersten Betriebszustandes gegenüber der letzten Pausenlänge des zweiten Betriebszustandes erfolgt, so dass das Messverhalten des optoelektronischen Sensors durch den Wechsel des Betriebszustands möglichst wenig gestört wird.

Die Summe aller Zykluslängen oder jede Summe unmittelbar aufeinanderfolgender Zykluslängen eines Musters des zweiten Betriebszustandes in Mikrosekunden ist ungleich einem ganzzahligen Vielfachen der Zykluslänge im ersten Betriebszustand in Mikrosekunden. Dadurch laufen zwei erfindungsgemäß betriebene optoelektronische Sensoren nicht mehr synchron nachdem einer von ihnen das Muster durchlaufen hat, oder wenn einer von ihnen im ersten Betriebsmodus und der andere im zweiten Betriebsmodus betrieben wird.

Um die Wahrscheinlichkeit einer Interferenz zweier gleichartiger optoelektronischer Sensoren noch weiter zu verringern, ist es bevorzugt, dass im zweiten Betriebsmodus die Durchlaufrichtung durch das Muster in Abhängigkeit von einer weiteren Bedingung, z.B. dem Schaltzustand oder der vorigen Durchlaufrichtung, gewählt wird. Alternativ sind für den zweiten Betriebsmodus vorzugsweise mehrere verschiedene Muster vorgesehen, wobei nach jedem Durchlauf durch ein Muster ein Wechsel zu einem von dem vorhergehenden Muster verschiedenen Muster gewählt wird.

Das erfindungsgemäße Computerprogramm ist eingerichtet, jeden Schritt eines Verfahrens nach dem ersten Aspekt der Erfindung oder nach dem zweiten Aspekt der Erfindung durchzuführen, insbesondere wenn es auf einer anwendungsspezifischen integrierten Schaltung (application-specific integrated circuit; ASIC) oder einem Mikrocontroller abläuft. Dadurch ermöglicht es die Implementierung der erfindungsgemäßen Verfahren auf einem herkömmlichen optoelektronischen Sensor, ohne an diesem bauliche Änderungen vornehmen zu müssen. Hierzu ist auch das erfindungsgemäße maschinenlesbare Speichermedium vorgesehen, auf welchem das erfindungsgemäße Computerprogramm gespeichert ist. Durch Aufspielen des erfindungsgemäßen Computerprogramms auf einen herkömmlichen optoelektronischen Sensor, der mindestens einen Sender und mindestens einen Empfänger aufweist, wird der erfindungsgemäße optoelektronische Sensor erhalten, der eingerichtet ist, um mittels eines Verfahrens gemäß dem zweiten Aspekt der Erfindung betrieben zu werden.

### Kurze Beschreibung der Zeichnungen

Ausführungsbeispiele der Erfindung sind in den Zeichnungen dargestellt und werden in der folgenden Beschreibung näher erläutert.
- Fig. 1: zeigt schematisch den Aufbau eines optoelektronischen Sensors, der mittels eines Verfahrens gemäß einer Ausführungsform der Erfindung betrieben werden kann.
- Fig. 2: zeigt in einem Diagramm die Unterdrückung von Überlagerungen zwischen einem optischen Störsignal mit konstanter Frequenz und Lichtimpulsfolgen, die mittels eines Verfahrens gemäß einem Ausführungsbeispiel der Erfindung erzeugt wurden.

### Ausführungsbeispiele der Erfindung

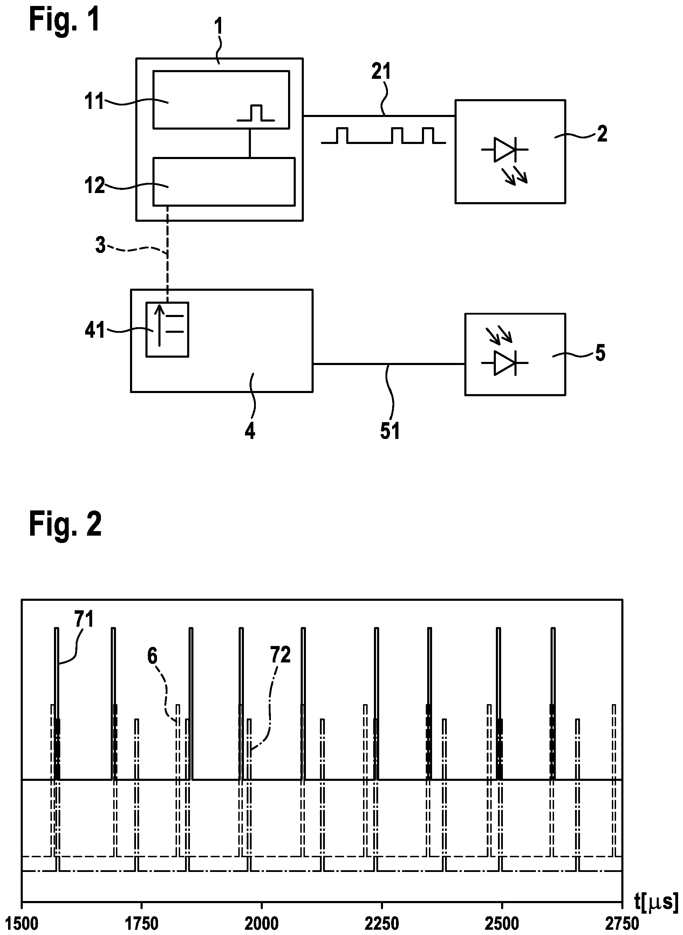

Lichtimpulse können von einem herkömmlichen optoelektronischen Sensor, wie er schematisch in Fig. 1 dargestellt ist, mittels Verfahren gemäß Ausführungsbeispielen der Erfindung ausgesandt werden. Dieser optoelektronische Sensor weist eine Signalerzeugungsvorrichtung 1 auf, die einen Pulsgenerator 11 und einen Mustergenerator 12 enthält. Die Signalerzeugungsvorrichtung 1 ist mittels einer Sendesignalleitung 21 mit einem Sender 2 verbunden. Der Sender 2 ist vorliegend als LED ausgeführt. Über eine Verknüpfung 3 ist der Mustergenerator 12 der Signalerzeugungsvorrichtung 1 mit einer Schwellwerteinrichtung 41 einer Signalauswertungsvorrichtung 4 verbunden. Letztere empfängt über eine Empfangssignalleitung 51 Signale eines Empfängers 5, der vorliegend als Fotodiode ausgeführt ist. Sie ist so eingerichtet, dass Signale, deren Intensität einen Minimalschwellenwert unterschreiten, ignoriert werden. Um in der Signalauswertung 4 eine Unterscheidung zwischen Signalen zu ermöglichen, die von dem Sender 2 ausgesandt wurden, und solchen, die von Störquellen ausgehen, wird das Puls/Pausen-Verhältnis eines ausgesandten Lichtsignals, das im Mustergenerator 12 generiert wird, über die Verknüpfung 3 der Schwellwerteinrichtung 41 zur Verfügung gestellt. Diese gibt Schwellwerte für das vom Empfänger 5 empfangene Empfangssignal vor, welche dem aufgrund des Puls/Pausen-Verhältnisses des Sendesignals zu erwartenden Empfangssignal entsprechen.

In einem ersten Betriebsmodus des optoelektronischen Sensors gemäß Fig. 1 generiert der Mustergenerator ein Signalmuster mit einem Puls/Pausen-Verhältnis von 1:25. Befindet sich in der Umgebung des optoelektronischen Sensors eine Störquelle, welche ein Störsignal mit ähnlichem Puls-/Pausen-Verhältnis aussendet, so addieren sich bei Interferenz dieser beiden Signale deren Intensitäten, so dass der Empfänger 5 ein Empfangssignal an die Signalauswertevorrichtung 4 weitergibt, dessen Intensität im Bereich von 70 % bis 150 % eines vorgegebenen Schwellenwertes liegt. Hierdurch erkennt der optoelektronische Sensor die Anwesenheit der Störquelle und schaltet in einen zweiten Betriebsmodus um. Die Schwellwerteinrichtung 41 beeinflusst dazu über die Verknüpfung 3 den Mustergenerator 51. In diesem wird in einem ersten Ausführungsbeispiel des erfindungsgemäßen Verfahrens ein Lichtimpulsmuster erzeugt, das aus sich wiederholenden Mustern von jeweils sieben Lichtimpulsen besteht. Das Puls/Pausen-Verhältnis innerhalb jedes Musters beträgt hierbei nacheinander 1:25, 1:30, 1:21, 1:28, 1:23, 1:31 und 1:20. Fig. 2 ist ein Überlagerungsdiagramm dieses Musters in zwei beispielhaften zeitlich gegeneinander versetzten Verläufen 71 und 72 sowie einem Störsignal 6, das ein konstantes Puls/Pausen-Verhältnis von 1:25 aufweist. Dieses Puls/Pausen-Verhältnis des Störsignals 6 wird durch eine Pulslänge von 5 µs und einer Pausenlänge von 124 µs erzeugt. Die Puls/Pausen-Verhältnisse des Lichtimpulsmusters im zweiten Betriebsmodus des optoelektronischen Sensors werden durch eine Pulslänge von ebenfalls 5 µs und durch Pausenlängen von 124 µs, 148 µs, 106 µs, 139 µs, 112 µs, 157 µs und 100 µs erzeugt. Es ist zu erkennen, dass eine Interferenz der Verläufe 71, 72 des erfindungsgemäßen Signalmusters mit dem Störsignal 6 auf diese Weise vermieden werden kann. Selbst dann, wenn zwei optoelektronische Sensoren, die dasselbe Signalmuster im zweiten Betriebsmodus verwenden, so angeordnet werden, dass sie sich potenziell gegenseitig stören könnten, kann man der Fig. 2 entnehmen, dass bereits ein geringer zeitlicher Versatz der beiden Signalmuster 71 und 72 eine Interferenz der Lichtimpulse weitgehend verhindert.

In einem zweiten Ausführungsbeispiel des erfindungsgemäßen Verfahrens wird bei einer Lichtimpulslänge von 5 µs die Zykluszeit, d. h. die Summe aus Lichtimpulslänge und darauffolgender Pausenlänge, im zweiten Betriebsmodus des optoelektronischen Sensors gemäß dem Muster 144 µs, 114 µs, 153 µs, 93 µs, 183 µs, 84 µs und 123 µs gewählt. Jede dieser Zykluszeiten ist ohne Rest durch 3 teilbar, was einfach die Realisierung kurzer Zykluszeiten ermöglicht.

Beide erfindungsgemäßen Lichtimpulsmuster weisen ein mittleres Puls/Pausen-Verhältnis von annähernd 1:25 auf, so dass ein einfacher Wechsel zwischen dem ersten und dem zweiten Betriebsmodus des optoelektronischen Sensors möglich ist.

In einem dritten Ausführungsbeispiel der Erfindung folgen die Zykluszeiten im zweiten Betriebsmodus des optoelektronischen Sensors dem Muster 37 µs, 47 µs, 31 µs, 59 µs, 29 µs, 53 µs, 41 µs. Dies ermöglicht für kurze Zykluszeiten die Gestaltung des Musters mit höheren Primzahlen, wobei die arithmetischen Mittelwerte zweier unmittelbar aufeinander folgender Zykluszeiten nur im Bereich von -9 % bis +9 % gegenüber einer konstanten Zykluszeit von 43 µs variieren.

## Patentansprüche

1. Verfahren zum Betreiben eines optoelektronischen Sensors der mindestens einen Sender (2) und mindestens einen Empfänger (5) aufweist, **dadurch gekennzeichnet, dass** der Sender (2) in einem ersten Betriebszustand des optoelektronischen Sensors Lichtimpulse mit konstanter Pausenlänge aussendet und in einem zweiten Betriebszustand des optoelektronischen Sensors Lichtimpulse in sich wiederholenden Mustern von mindestens drei Lichtimpulsen aussendet, wobei im zweiten Betriebszustand alle Pausenlängen zwischen den Lichtimpulsen eines Musters oder alle Zykluslängen eines Musters unterschiedlich sind und jede Pausenlänge oder Zykluslänge im Bereich von 60 % bis 150 % des arithmetischen Mittelwerts aller Pausenlängen oder Zykluslängen eines Musters liegt und die Pausenlängen in dem ersten Betriebszustand 95 % bis 105 % des arithmetischen Mittelwerts aller Pausenlängen eines Musters in dem zweiten Betriebszustand entsprechen, und wobei die Summe aller Zykluslängen oder jede Summe unmittelbar aufeinanderfolgender Zykluslängen eines Musters des zweiten Betriebszustandes in Mikrosekunden ungleich einem Vielfachen der Zykluslänge im ersten Betriebszustand in Mikrosekunden ist, wobei ein Wechsel von dem ersten Betriebszustand in den zweiten Betriebszustand erfolgt, wenn der Empfänger (5) ein Lichtsignal empfängt, dessen Intensität einen vorgegebenen Schwellenwert überschreitet.

2. Verfahren nach Anspruch 1, **dadurch gekennzeichnet, dass** ein Wechsel von dem ersten Betriebszustand in den zweiten Betriebszustand erfolgt, wenn der Empfänger (5) ein Lichtsignal empfängt, dessen Intensität nicht nur den vorgegebenen Schwellenwert überschreitet, sondern gleichzeitig unter einem weiteren Schwellenwert liegt.

3. Verfahren nach Anspruch 1 oder 2, **dadurch gekennzeichnet, dass** ein Wechsel von dem zweiten Betriebszustand in den ersten Betriebszustand nur am Ende eines Musters erfolgt, und dass die letzte Pausenlänge jedes Musters im Bereich von 90 % bis 110 % der konstanten Pausenlängen des ersten Betriebszustandes liegt.

4. Verfahren nach einem der Ansprüche 1 bis 3, **dadurch gekennzeichnet, dass** die Durchlaufrichtung durch das sich wiederholende Muster in Abhängigkeit von einer vorgegebenen Bedingung gewählt wird.

5. Verfahren nach einem der Ansprüche 1 bis 4, **dadurch gekennzeichnet, dass** im zweiten Betriebszustand der arithmetische Mittelwert der Länge zweier unmittelbar aufeinander folgender Pausen oder Zyklen im Bereich von 80 % bis 112 % des arithmetischen Mittelwerts der Länge aller Pausen oder Zyklen eines Musters liegt.

6. Verfahren nach einem der Ansprüche 1 bis 5, **dadurch gekennzeichnet, dass** im zweiten Betriebszustand der arithmetische Mittelwert der Länge von vier unmittelbar aufeinander folgender Pausen oder Zyklen im Bereich von 90 % bis 108 % des arithmetischen Mittelwerts der Länge aller Pausen oder Zyklen eines Musters liegt.

7. Verfahren nach einem der Ansprüche 1 bis 6, **dadurch gekennzeichnet, dass** im zweiten Betriebszustand der arithmetische Mittelwert der Länge von acht unmittelbar aufeinander folgender Pausen oder Zyklen im Bereich von 95 % bis 106 % des arithmetischen Mittelwerts der Länge aller Pausen oder Zyklen eines Musters liegt.

8. Verfahren nach einem der Ansprüche 1 bis 7, **dadurch gekennzeichnet, dass** im zweiten Betriebszustand innerhalb eines Musters die Länge einer Pause gegenüber der Länge der unmittelbar vorhergehenden Pause abwechselnd größer wird und geringer wird.

9. Verfahren nach einem der Ansprüche 1 bis 8, **dadurch gekennzeichnet, dass** im zweiten Betriebszustand alle Puls-/Pausenverhältnisse desselben Musters Primzahlen sind, oder dass alle Zykluslängen desselben Musters in Mikrosekunden Primzahlen sind, oder dass die Verhältnisse der Zykluslängen Primzahlverhältnisse sind.

10. Verfahren nach einem der Ansprüche 1 bis 9, **dadurch gekennzeichnet, dass** im zweiten Betriebszustand ein Puls/Pausen-Verhältnis eines Musters 95 % bis 105 % des arithmetischen Mittelwerts aller Puls/Pausen-Verhältnisse des Musters entspricht und alle weiteren Puls-/Pausenverhältnisse desselben Musters Primzahlen sind, oder dass eine Zykluslänge eines Musters 95 % bis 105 % des arithmetischen Mittelwerts aller Zykluslängen des Musters entspricht und alle weiteren Zykluslängen desselben Musters in Mikrosekunden Primzahlen sind, oder dass die Verhältnisse der Zykluslängen Primzahlverhältnisse sind.

11. Verfahren nach einem der Ansprüche 1 bis 10, **dadurch gekennzeichnet, dass** im zweiten Betriebszustand die Division der Länge jedes Zyklus in Mikrosekunden durch drei eine ganze Zahl ergibt.

12. Computerprogramm, umfassend Befehle, die bewirken, dass der optoelektonische Sensor des Anspruchs 14 die Verfahrensschritte nach einem der Ansprüche 1-11 ausführt.

13. Maschinenlesbares Speichermedium, auf welchem ein Computerprogramm nach Anspruch 12 gespeichert ist.

14. Optoelektronischer Sensor, der mindestens einen Sender (2) und mindestens einen Empfänger (5) aufweist, **dadurch gekennzeichnet, dass** er eingerichtet ist, um mittels eines Verfahrens nach einem der Ansprüche 1 bis 11 betrieben zu werden.

## Claims

1. Method for operating an optoelectronic sensor that has at least one transmitter (2) and at least one receiver (5), **characterised in that**, in a first operating state of the optoelectronic sensor, the transmitter (2) emits light impulses with constant pause length and, in a second operating state of the optoelectronic sensor, emits light impulses in repeating patterns of at least three light impulses, wherein, in the second operating state, all pause lengths between the light impulses of a pattern or all cycle lengths of a pattern are different, and each pause length or cycle length ranges from 60% to 150% of the arithmetic mean of all pause lengths or cycle lengths of a pattern, and the pause lengths in the first operating state correspond to 95% to 105% of the arithmetic mean of all pause lengths of a pattern in the second operating state, and wherein the sum of all cycle lengths or each sum of directly successive cycle lengths of a pattern of the second operating state in microseconds is not equal to a multiple of the cycle length in the first operating state in microseconds, wherein a change from the first operating state to the second operating state is carried out when the receiver (5) receives a light signal, the intensity of which exceeds a predetermined threshold value.

2. Method according to claim 1, **characterised in that** a change from the first operating state to the second operating state is carried out when the receiver (5) receives a light signal, the intensity of which not only exceeds the predetermined threshold value, but rather simultaneously lies below a further threshold value.

3. Method according to claim 1 or 2, **characterised in that** a change from the second operating state to the first operating state is only carried out at the end of a pattern, and the final pause length of each pattern ranges from 90% to 110% of the constant pause lengths of the first operating state.

4. Method according to one of claims 1 to 3, **characterised in that** the flow path direction through the repeating patterns is chosen depending on a predetermined condition.

5. Method according to one of claims 1 to 4, **characterised in that**, in the second operating state, the arithmetic mean of the length of two directly successive pauses or cycles ranges from 80% to 112% of the arithmetic mean of the length of all pauses or cycles of a pattern.

6. Method according to one of claims 1 to 5, **characterised in that**, in the second operating state, the arithmetic mean of the length of four directly successive pauses or cycles ranges from 90% to 108% of the arithmetic mean of the length of all pauses or cycles of a pattern.

7. Method according to one of claims 1 to 6, **characterised in that**, in the second operating state, the arithmetic mean of the length of eight directly successive pauses or cycles ranges from 95% to 106% of the arithmetic mean of the length of all pauses or cycles of a pattern.

8. Method according to one of claims 1 to 7, **characterised in that**, in the second operating state, within a pattern, the length of a pause in comparison to the length of the pause directly preceding it alternatingly becomes greater and becomes smaller.

9. Method according to one of claims 1 to 8, **characterised in that**, in the second operating state, all pulse/pause ratios of that pattern are prime numbers, or all cycles lengths of that pattern in microseconds are prime numbers, or the ratios of the cycle lengths are prime number ratios.

10. Method according to one of claims 1 to 9, **characterised in that**, in the second operating state, a pulse/pause ratio of a pattern corresponds to 95% to 105% of the arithmetic mean of all pulse/pause ratios of the pattern, and all further pulse/pause ratios of that pattern are prime numbers, or a cycle length of a pattern corresponds to 95% to 105% of the arithmetic mean of all cycle lengths of the pattern, and all further cycle lengths of that pattern in microseconds are prime numbers, or the ratios of the cycle lengths are prime number ratios.

11. Method according to one of claims 1 to 10, **characterised in that**, in the second operating state, the division of the length of each cycle in microseconds by three results in an integer.

12. Computer program, comprising commands that cause the optoelectronic sensor of claim 14 to carry out the method steps according to one of claims 1-11.

13. Machine-readable storage medium on which a computer program according to claim 12 is stored.

14. Optoelectronic sensor that has at least one transmitter (2) and at least one receiver (5), **characterised in that** it is set up in order to be operated by means of a method according to one of claims 1 to 11.

## Revendications

1. Procédé de mise en œuvre d'un capteur optoélectronique qui présente au moins un émetteur (2) et au moins un récepteur (5), **caractérisé en ce que** l'émetteur (2) émet des impulsions de lumière avec une durée de coupure constante dans un premier état de fonctionnement du capteur optoélectronique et, dans un deuxième état de fonctionnement du capteur optoélectronique émet des impulsions de lumière dans des modèles se répétant d'au moins trois impulsions de lumière, où, dans le deuxième état de fonctionnement, toutes les durées de coupure entre les impulsions de lumière d'un modèle ou toutes les durées de cycle d'un modèle sont différentes et chaque durée de coupure ou durée de cycle se situe dans la plage de 60 % à 150 % de la moyenne arithmétique de toutes les durées de coupure ou durées de cycle d'un modèle et les durées de coupure dans le premier état de fonctionnement correspondent à 95 % à 105 % de la moyenne arithmétique de toutes les durées de coupure d'un modèle dans le deuxième état de fonctionnement, et où la somme de toutes les durées de cycle ou chaque somme de durées de cycles successifs les uns immédiatement des autres d'un modèle du deuxième état de fonctionnement est inégal en microsecondes à un multiple des durées de cycles dans le premier état de fonctionnement en microsecondes, où il y a un échange du premier état de fonctionnement avec le deuxième état de fonctionnement lorsque le récepteur (5) reçoit un signal lumineux dont l'intensité dépasse une valeur de seuil prédéfinie.

2. Procédé selon la revendication 1, **caractérisé en ce qu'**il y a un échange du premier état de fonctionnement avec le deuxième état de fonctionnement lorsque le récepteur (5) reçoit un signal lumineux dont l'intensité non seulement dépasse pas la valeur de seuil prédéfinie mais se situe simultanément en-dessous d'une autre valeur de seuil.

3. Procédé selon la revendication 1 ou la revendication 2, **caractérisé en ce qu'**il y a un échange du deuxième état de fonctionnement avec le premier état de fonctionnement uniquement à la fin d'un modèle, et que la dernière durée de coupure de chaque modèle se situe dans la plage de 90 % à 110 % de la durée de coupure constante du premier état de fonctionnement.

4. Procédé selon l'une des revendications 1 à 3, **caractérisé en ce que** le sens de passage à travers le modèle se répétant est choisi en fonction d'une condition prédéfinie.

5. Procédé selon l'une des revendications 1 à 4, **caractérisé en ce que**, dans le deuxième état de fonctionnement, la valeur moyenne arithmétique des durées de deux coupures ou cycles se succédant directement se situe dans la plage de 80 % à 112 % de la valeur moyenne arithmétique des durées de toutes les coupures ou cycles d'un modèle.

6. Procédé selon l'une des revendications 1 à 5, **caractérisé en ce que**, dans le deuxième état de fonctionnement, la valeur moyenne arithmétique des durées de quatre coupures ou cycles se succédant directement se situe dans la plage de 90 % à 108 % de la valeur moyenne arithmétique des durées de toutes les coupures ou cycles d'un modèle.

7. Procédé selon l'une des revendications 1 à 6, **caractérisé en ce que**, dans le deuxième état de fonctionnement, la valeur moyenne arithmétique des durées de huit coupures ou cycles se succédant directement se situe dans la plage de 95 % à 106 % de la valeur moyenne arithmétique des durées de toutes les coupures ou cycles d'un modèle.

8. Procédé selon l'une des revendications 1 à 7, **caractérisé en ce que**, dans le deuxième état de fonctionnement, la durée d'une coupure dans un modèle devient alternativement plus grande et plus faible par rapport à la durée de coupure immédiatement précédente.

9. Procédé selon l'une des revendications 1 à 8, **caractérisé en ce que** dans le deuxième état de fonctionnement, tous les rapports impulsions/coupures du même modèle sont des nombres premiers ou que toutes les durées de cycles du même modèle sont des nombres premiers de microsecondes, ou que les rapports des durées de cycles sont des rapports de nombres premiers.

10. Procédé selon l'une des revendications 1 à 9, **caractérisé en ce que** dans le deuxième état de fonctionnement, un rapport impulsions/coupures d'un modèle correspond à 95 % à 105 % de la valeur moyenne arithmétique de tous les rapports impulsions/coupures du modèle et tous les autres rapports impulsions/coupures du même modèle sont des nombres premiers ou qu'une durée de cycle d'un modèle correspond à 95 % à 105 % de la valeur moyenne arithmétique de toutes les durées de cycles du modèle et toutes les autres durées de cycle du même modèle sont des nombres premiers en microsecondes ou que les rapport des durées de cycles sont des rapports de nombres premiers.

11. Procédé selon l'une des revendications 1 à 10, **caractérisé en ce que** dans le deuxième état de fonctionnement, la division de la durée de chaque cycle en microsecondes par trois a pour résultat un nombre entier.

12. Programme informatique comprenant des commandes, qui font en sorte que le capteur optoélectronique selon la revendication 14 exécute les étapes de procédé selon l'une des revendications 1 à 11.

13. Support de stockage lisible par machine sur lequel un programme informatique selon la revendication 12 est stocké.

14. Capteur optoélectronique qui présente au moins un émetteur (2) et au moins un récepteur (5), **caractérisé en ce qu'**il est conçu pour être mis en fonctionnement au moyen d'un procédé selon l'une des revendications 1 à 11.
